# EUROPÄISCHE PATENTANMELDUNG

(11) **EP 0 616 457 A1**
(43) Veröffentlichungstag der Anmeldung: **21.09.1994**
(21) Anmeldenummer: 94102298.0
(22) Anmeldetag: 16.02.1994
(51) Int. Cl.: H04M 1/00

(54) **Verfahren und Vorrichtung zur Erweiterung des Benutzungsgebietes von Handgeräten der Schnurlostelefonie**

(30) Priorität: 16.03.1993 CH 780/93
(71) Anmelder: ASCOM BUSINESS SYSTEMS AG, CH-4503 Solothurn (CH)
(72) Erfinder: Meier, Felix, CH-8193 Eglisau (CH)
(74) Vertreter: Schwerdtel, Eberhard, Dr.

(57) **Zusammenfassung**

Es sind mehrere Fixstationen (13, 23, 33) vorgesehen, die unterschiedliche Kennungen (A, D, B) aufweisen und unterschiedlichen Gebieten (11, 21, 31) zugeordnet sind. Die Handgeräte (15) weisen eine, zwei oder mehr Kennungen (A, B, C, D) auf und lassen sich jeweils in allen den Gebieten (11, 21, 31) betreiben, in denen eine ihrer Kennungen mit der Kennung der jeweiligen Fixstation (13, 23, 33) übereinstimmt.

Bei einem von einer Fixstation (13, 23, 33) ankommenden Anruf werden im gerufenen Handgerät (15) sukzessive alle gespeicherten Kennungen (A, B, C, D) mit der Kennung der rufenden Fixstation verglichen. Ergibt sich eine Übereinstimmung, dann erfolgt der vollständige Verbindungsaufbau.

Bei einem von einem Handgerät (15) ausgehenden Anruf wird jeweils nur eine der gespeicherten Kennungen (A, B, C, D) ausgesendet. Bevorzugt ist das diejenige Kennung, die als letzte bei einem ankommenden Anruf als übereinstimmend erkannt worden ist.

## Beschreibung

Die Erfindung betrifft ein Verfahren und eine Vorrichtung zur Erweiterung des Benutzungsgebietes von Handgeräten der Schnurlostelefonie entsprechend dem Oberbegriff der unabhängigen Ansprüche.

Schnurlostelefone sind allgemein bekannt. Sie weisen im einfachsten Fall jeweils ein an das Telefonnetz angeschlossenes Basisgerät und ein tragbares Handgerät auf. Das Basis- und das Handgerät sind bei Telefongesprächen miteinander über Funk verbunden.

Aus der Schrift EP 0 164 312, ist beispielsweise ein Schnurlostelefon der genannten einfachen Art bekannt. Zur Vermeidung unerwünschter Beeinträchtigungen oder unerlaubter Benutzungen des Schnurlostelefons weisen dessen Basisgerät und dessen Handgerät eine gemeinsame, individuelle Kennung auf, die so geartet ist, dass mehrere Schnurlostelefone im gleichen Gebiet durch ihre unterschiedlichen Kennungen problemlos unterscheidbar sind.

Es sind weiter Systeme von Schnurlostelefonen bekannt, bei denen eine erste Vielzahl von Fixstationen und eine zweite Vielzahl von Handgeräten vorgesehen ist. Hierzu wird beispielsweise auf das Normenpapier ELSE, Spezifikationen der einheitlichen Luftschnittstelle für CT1+/CT1 Schnurlose Telefone, V1.2, Zentralverband Elektronik- und Elektroindustrie e.V., Arbeitskreis Schnurlose Telefone und Systeme, 1990 verwiesen. Bei solchen Systemen können sich die Handgeräte im jeweiligen Gebiet des Systems frei bewegen und mit allen zugehörigen Fixstationen kommunizieren. Hierzu dienen ebenfalls Kennungen, die für die Systeme unterschiedlicher Betreiber oder Benutzer unterschiedlich sind und eine gegenseitige Beeinflussung ausschliessen.

Es besteht nun der Wunsch, die Handgeräte derartiger Systeme als persönliche Geräte Benutzern fest zuzuordnen. Hierdurch ergibt sich für diese der Wunsch, ihr Handgerät generell überall benutzen zu wollen und nicht in jedem Gebiet ein anderes Handgerät. Als Beispiel sei ein Kleinbetrieb genannt, dessen führende Personen, z.B. vier, ihre Handgeräte auch daheim in ihren Wohnungen verwenden wollen. Die Wohnungen liegen dabei jeweils ausserhalb der Funkreichweite der Fixstationen im Kleinbetrieb..

Es ergibt sich hieraus die Aufgabe der Erfindung, ein Verfahren anzugeben, wie die Benutzungsmöglichkeit der Handgeräte von Schnurlostelefonen so erweiterbar ist, dass sie an verschiedenen Orten verwendbar sind.

Die Lösung dieser Aufgabe ist durch den kennzeichnenden Teil der unabhängigen Ansprüche gegeben. Die abhängigen Ansprüche geben Ausgestaltungen der Erfindung an.

Im folgenden wird die Erfindung anhand von zwei Figuren beispielsweise näher beschrieben. Es zeigen:
Fig. 1 - schematische Ansicht einer Anlage für Schnurlostelefonie
Fig. 2 - Blockschaltbild eines Handgerätes.

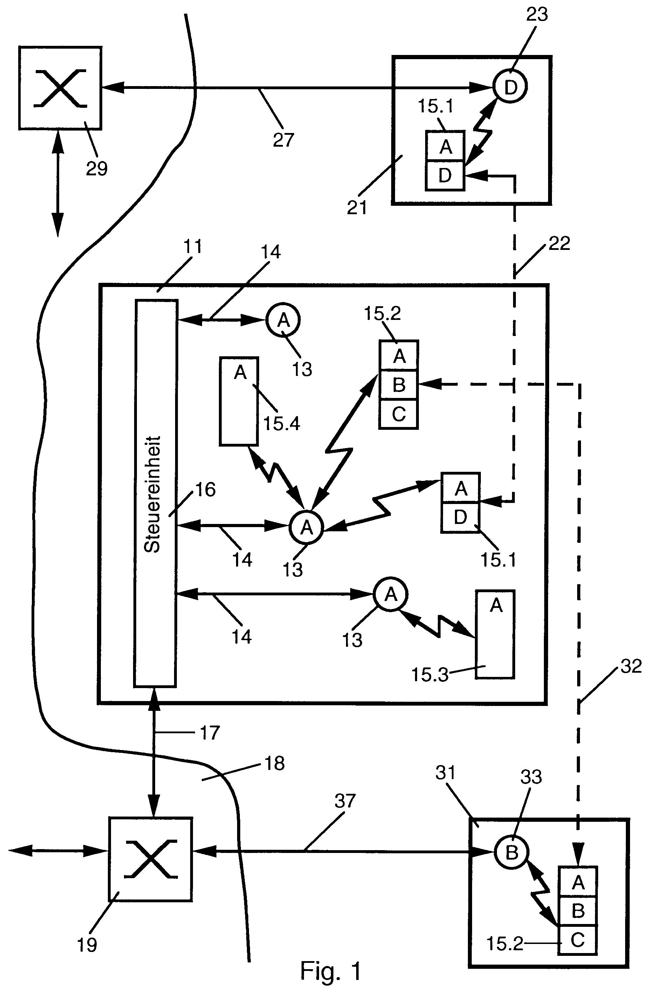

Fig. 1 zeigt den schematischen Aufbau eines Systems von Schnurlostelefonen. 11 bezeichnet ein Gebiet, z.B. ein Fabrikareal, in dem mehrere, z.B. drei Fixstationen 13 gleichberechtigt so angeordnet sind, dass das gesamte Gebiet 11 für den Gebrauch von Handgeräten 15 abgedeckt ist. Jeder Fixstation 13 ist einheitlich eine Kennung A zugeteilt. Die Fixstationen sind über Leitungen 14 mit einer gemeinsamen Steuereinheit 16 verbunden, die in gewisser Weise einer Haustelefonzentrale in der herkömmlichen Telefonie entspricht. Die Steuereinheit 16 ist über eine Digitalleitung 17, z.B. eine ISDN-Leitung (Integrated Services Digital Network) mit dem öffentlichen Telefonnetz 18 verbunden, insbesondere über eine Zentrale 19.

Es sind nun vier Handgeräte 15.1 - 15.4 dargestellt, die im Gebiet 11 über jede der drei Fixstationen mit beliebigen Teilnehmern kommunizieren können. Jedes Handgerät 15 weist zu diesem Zweck die gleiche Kennung A wie die Fixstationen auf. Die Handgeräte 15.3 und 15.4 besitzen nur diese eine Kennung A und sind damit ausserhalb des Gebietes 11 nicht einsetzbar.

Die Handgeräte 15.1 und 15.2 weisen dagegen eine bzw. zwei weitere Kennungen D bzw. B, C auf. Sie lassen sich daher in anderen Gebieten 21 bzw. 31 ebenfalls betreiben, da die diesen Gebieten zugeordneten Fixstationen 23 bzw. 33 ebenfalls die Kennungen D bzw. B aufweisen. Der Transport der Handgeräte 15.1, 15.2 von einem Gebiet, z.B. 11 in ein anderes 21 bzw. 31 und zurück, ist durch gestrichelte Doppelpfeile 22, 32 dargestellt. Die Fixstation 33 ist über eine Leitung 37 mit der bereits genannten Zentrale 19 verbunden. Dies bedeutet, dass die Gebiete 11 und 31 dem gleichen Ortsnetz des öffentlichen Netzes angehören. Die Fixstation 23 ist dagegen über eine Leitung 27 an eine andere Zentrale 29 des öffentlichen Netzes 18 angeschlossen, die z.B. in einer anderen Ortschaft liegt.

Das Handgerät 15.2 kann in einem dritten Gebiet betrieben werden, dem die Kennung C zugeordnet ist. Dies kann z.B. ein Ferienhaus sein.

Aus der einleitend erwähnten Schrift EP 0 164 312 ist bekannt, die einem Handgerät 15 jeweils zugeordnete Kennung in einem PROM-Speicher (programable read only memory) zu speichern, wobei ein spezielles Vorgehen vorgesehen ist, um die jeweilige, einzige Kennung A, B, C, D unaustauschbar zu machen.

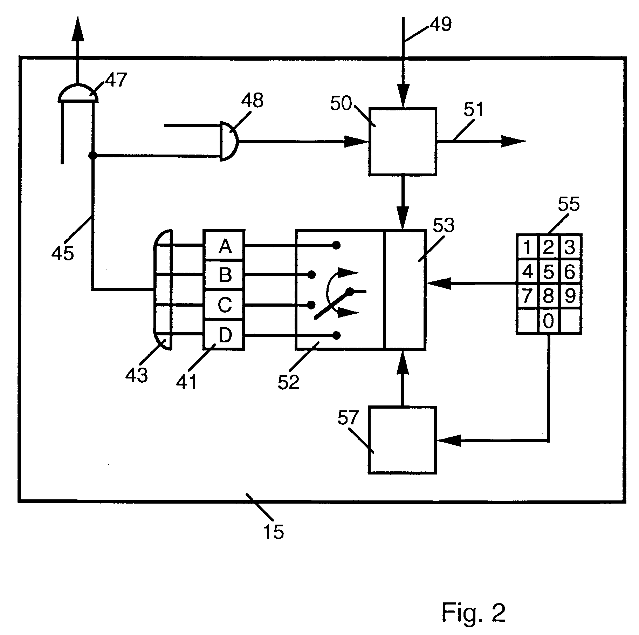

Fig. 2 zeigt nun in Art eines Blockschaltbildes den Aufbau eines Handgerätes 15 mit mehr als einer Kennung A, B, C, D. Diese Kennungen sind in einem Speicher 41 gespeichert, in den mehrmals eingelesen werden kann und aus dem jede Speicherzelle beliebig wiederholt auslesbar ist. Ein solcher Speicher ist z.B. ein EEPROM (erasable programable read only memory). Dem Speicher 41 nachgeschaltet ist ein ODER-Tor 43, über das die jeweils aufgerufene Kennung A, B, C oder D auf eine abgehende Leitung 45 gelangt. In diese Leitung sind zwei UND-Tore 47, 48 eingefügt, von denen das eine 48 zu einer Vergleichsschaltung 50 führt.

Die Kennungen A, B, C, D des Speichers 41 werden durch eine Zeigerschaltung (Pointer) 52 aufgerufen. Diese ist als mehrpoliger Schalter symbolisiert, wobei eine zugeordnete Steuerung 53 den Schalter bedient. An die Steuerung sind zur Eingabe die Vergleichsschaltung 50, die Tastatur 55 des Handgerätes 15 und eine Sperrschaltung 57 angeschlossen.

Das Handgerät 15 arbeitet wie folgt:
Bei einem von einer Fixstation 13, 23, 33 ankommenden Anruf erreicht die zugeordnete Kennung, z.B. die Kennung C über den Eingang 49 die Vergleichsschaltung 50. Diese Schaltung veranlasst nun über die Steuerung 53 die Zeigerschaltung 52, die gespeicherten Kennungen A, B, C, D eine nach der anderen abzurufen. Die Kennungen gelangen über das ODER-Tor 43, die Leitung 45 und das eine, zu diesem Zweck geöffnete UND-Tor 48 zur Vergleichsschaltung 50. Diese Schaltung 50 vergleicht nun sukzessive die jeweiligen Kennungen und gibt ein Erlaubnis-Signal auf ihren Ausgang 51 ab, sobald Übereinstimmung der jeweiligen Kennungen besteht, im Beispiel bei der Kennung C. Dieses Erlaubnis-Signal bewilligt den vollständigen Verbindungsaufbau, der hier nicht weiter geschildert wird. Weiter gibt die Vergleichsschaltung 50 der Steuerung 53 bekannt, welche Kennung, im Beispiel die Kennung C, sie erkannt hat. Die Steuerung 53 speichert diese Angabe.

Stimmt keine der im Speicher 41 gespeicherten Kennungen A, B, C, D mit der über den Eingang 49 ankommenden Kennung überein, wird der begonnene Verbindungsaufbau gestoppt. Es findet weiter kein Zusammenwirken zwischen der rufenden Fixstation 13, 23, 33 und dem Handgerät 15 statt.

Bei einem vom Handgerät 15 zu einer Fixstation 13, 23, 33 abgehenden Anruf wählt die Steuerung 53 diejenige der gespeicherten Kennungen A, B, C, D aus, die ihr als letzte vom der Vergleichsschaltung 50 genannt wurde. Diese Kennung, im Beispiel die Kennung C, entspricht mit erheblicher Wahrscheinlichkeit der Kennung der nächstliegenden Fixstation 13, 23, 33. Diese Kennung wird nun über das ODER-Tor 43 und das zu diesem Zweck offene UND-Tor 47 ausgesandt. Stimmt die ausgesandte Kennung mit der Kennung der nächstliegenden Fixstation 13, 23, 33 überein, dann erfolgt die vollständige Verbindungsaufnahme. Stimmen die Kennungen dagegen nicht überein, dann meldet das Handgerät 15 die Nichtübereinstimmung und bricht den weiteren Verbindungsaufbau ab.

Der Benutzer des Handgerätes 15 kann nun über die Tastatur 55 der Steuerung 53 konkret eingeben, welche der im Speicher 44 gespeicherten Kennungen A, B, C, D für den nächsten Wählversuch zu verwenden ist. Der Benutzer kann damit die entstandene Blockade überwinden oder eine solche von vorne herein verhindern. Der Benutzer kann weiter, ebenfalls über die Tastatur 55, die Sperrschaltung 57 aktivieren. Diese hat die Funktion, die jeweils ausgewählte Kennung A, B, C oder D auf Dauer, unabhängig von ankommenden Anrufen, ausgewählt zu halten.

Die genannten Eingaben des Benutzers erfolgen mit Vorteil über eine vorbestimmte Bedienprozedur, d.h. das Drücken vorgegebener Kommandotasten. Es kann aber auch vorgesehen sein, die Eingaben über Doppelfunktionstasten der Tastatur 55 auszulösen, d.h. beispielsweise durch gleichzeitiges Drücken der Zifferntasten 4 und 6.

Das beschriebene Handgerät 15 erfordert gegenüber bekannten Handgeräten nur unwesentlich mehr Aufwand. Die genannten Blöcke 41, 43, 47, 48, 50, 52, 53, 55, 57 sind entweder auch für die bekannten Handgeräte unabdingbar oder lassen sich durch geringfügige Erweiterungen sonstiger Schaltkreise einfach realisieren. Dem geringen Mehraufwand steht jedoch eine wesentlich gesteigerte Gebrauchstüchtigkeit gegenüber, die der Benützung der Handgeräte 15 als universelle, persönliche Geräte wesentlich entgegenkommt.

Der Aufbau des Handgerätes 15 ist auf mancherlei Weise möglich. Hierdurch lassen sich viele Varianten denken. Insbesondere sei genannt, dass die Zahl der im Speicher 41 gespeicherten Kennungen A, B, C, D zwei, drei, vier oder mehr sein kann. Der Vergleich der Kennungen in der Vergleichsschaltung 50 kann bitparallel oder bitseriell erfolgen, desgleichen der Transport über die Leitung 45. Der Aufbau der Zeigerschaltung 52 und der Steuerung 53 lässt sich mittels eines allgemeinen Microprozessors oder durch Spezialschaltungen realisieren, usw.

## Patentansprüche

1. Verfahren zur Erweiterung des Benutzungsgebietes für Handgeräte (15) der Schnurlostelefonie,
wobei Kennungen (A, B, C, D) vorgesehen sind, mittels derer Fixstationen (13) und Handgeräte (15) bei der Verbindungsaufnahme prüfen, ob sie einander zugeordnet sind oder nicht,
dadurch gekennzeichnet,
- dass in jedem Handgerät (15) die Kennungen (A, B, C, D) aller derjenigen Fixstationen (13, 23, 33) eingespeichert werden, in deren Gebieten (11, 21, 31) das jeweilige Handgerät (15) betreibbar sein soll, und
- dass bei einem von einer Fixstation (13, 23, 33) ankommenden Anruf die gespeicherten Kennungen (A, B, C, D) nacheinander mit der Kennung der rufenden Fixstation (13, 23, 33) verglichen werden, bis entweder Übereinstimmung festgestellt wird oder bis alle gespeicherten Kennungen (A, B, C, D) verglichen sind.

2. Verfahren nach Anspruch 1,
dadurch gekennzeichnet,
- dass jeweils eine der gespeicherten Kennungen (A, B, C, D) markiert ist, und
- dass bei einem von einem Handgerät (15) abgehenden Anruf die jeweils markierte Kennung (A, B, C, D) ausgesendet wird.

3. Verfahren nach Anspruch 2,
dadurch gekennzeichnet,
dass jeweils diejenige der gespeicherten Kennungen (A, B, C, D) markiert ist, die als letzte mit der Kennung (A, B, C, D) einer rufenden Fixstation (13, 23, 33) übereinstimmte.

4. Verfahren nach Anspruch 2,
dadurch gekennzeichnet,
dass über die Tastatur (55) des Handgerätes (15) jede beliebige der gespeicherten Kennungen (A, B, C, D) markierbar ist.

5. Verfahren nach Anspruch 1,
dadurch gekennzeichnet,
dass über die Tastatur (55) des Handgerätes (15) die jeweils momentan markierte Kennung (A, B, C, D) auf Dauer fixierbar ist.

6. Vorrichtung zur Erweiterung des Benutzungsgebietes für Handgeräte (15) der Schnurlostelefonie,
wobei Kennungen (A, B, C, D) vorgesehen sind, mittels derer Fixstationen (13) und Handgeräte (15) bei der Verbindungsaufnahme prüfen, ob sie einander zugeordnet sind oder nicht,
gekennzeichnet durch
- einen Speicher (41) zum Speichern von zwei oder mehr Kennungen (A, B, C, D),
- eine Zeigerschaltung (52) mit zugeordneter Steuerung (53) zum Auswählen und Auslesen jeweils einer der gespeicherten Kennungen (A, B, C, D),
- eine Vergleichsschaltung (50) zum sukzessiven Vergleichen jeweils einer von einer Fixstation (13, 23, 33) ankommenden Kennung mit den aus dem Speicher (41) ausgelesenen Kennungen (A, B, C, D) und zum Abgeben eines Ausgangssignals an einen Ausgang (51) bei Übereinstimmung der miteinander verglichenen Kennungen (A, B, C, D).

7. Vorrichtung nach Anspruch 6,
gekennzeichnet durch
eine Sperrschaltung (57) zum Verhindern des Auslesens der gespeicherten Kennungen (A, B, C, D) aus dem Speicher (41) bis auf eine einzige, markierte dieser Kennungen.

8. Vorrichtung nach Anspruch 7,
gekennzeichnet
durch wenigstens eine Eingabetaste zur manuellen Beeinflussung der Zeigerschaltung (52) und/oder der Sperrschaltung (57).
